Europäisches Patentamt

European Patent Office

Office européen des brevets

(11) Numéro de publication: **0 028 188**
**B1**

(12) **FASCICULE DE BREVET EUROPEEN**

(45) Date de publication du fascicule du brevet: **24.09.86**

(51) Int. Cl.⁴: **H 04 B 7/17**

(21) Numéro de dépôt: **80401492.6**

(22) Date de dépôt: **21.10.80**

(54) **Système de balises pour transmission d'informations de proche en proche.**

(30) Priorité: **24.10.79 FR 7926351**

(43) Date de publication de la demande:
**06.05.81 Bulletin 81/18**

(45) Mention de la délivrance du brevet:
**24.09.86 Bulletin 86/39**

(84) Etats contractants désignés:
**AT BE CH DE FR GB IT LI LU NL SE**

(56) Documents cités:
**DE-A-2 508 550**
**US-A-2 533 269**
**US-A-3 772 596**
**US-A-3 845 472**
**US-A-3 891 804**

(73) Titulaire: **Gendrot, André Jean-Claude**
**78 boulevard Ornano**
**F-75018 Paris (FR)**

(72) Inventeur: **Gendrot, André Jean-Claude**
**78 boulevard Ornano**
**F-75018 Paris (FR)**

(74) Mandataire: **Bloch, Robert et al**
**Cabinet BLOCH 6, rue du Faubourg Saint-Honoré**
**F-75008 Paris (FR)**

Courier Press, Leamington Spa, England.

## Description

La présente invention concerne un système de transmission d'informations de proche en proche, comprenant une série de balises identiques, comportant chacune, un émetteur et un récepteur accordés sur une même fréquence, et des moyens pour couper le récepteur dès que l'émetteur est mis en marche, chaque balise pouvant ainsi recevoir une information d'une autre et retransmettre cette information reçue d'une autre à au moins une balise n'ayant pas reçu d'information.

On connaît déjà un tel système, notamment par le document US—A—3 772 596. Mais dans ce système, au demeurant de transmission par byte, il faut attendre d'avoir reçu le message complet pour émettre vers les balises n'ayant pas encore reçu le message, c'est-à-dire pour procéder à sa réémission. Il en résulte une perte de temps.

La présente invention vise à perfectionner un tel système, pour rendre omnidirectionnel, simultané et synchrone, et que la notion d'ordre des balises y soit exclue.

A cet effet, la présente invention concerne un système du type précisé ci-dessus, caractérisé par le fait que toutes les balises peuvent recevoir simultanément une même information et chaque balise retransmettre l'information reçue d'une autre à toutes les balises n'ayant pas reçu d'information, l'émetteur d'une balise est mis en marche dès qu'un élément binaire, ou "bit" d'information est reçu d'une autre balise, la transmission s'effectue bit par bit, et les balises possèdent des moyens pour engendrer une information propre et/ou traiter une information reçue.

L'invention sera mieux comprise à l'aide de la description suivante d'une forme de réalisation particulière de l'invention, en référence au dessin annexé, sur lequel

— la fig. 1 est une représentation fonctionnelle schématique d'une balise du système de l'invention;

— la fig. 2 est un diagramme des temps des signaux d'une balise;

— la fig. 3 est un exemple de message, ou paquets de bits ou bytes transmis par le système, et

— la fig. 4 est une représentation fonctionnelle schématique des circuits de liaison entre le récepteur et l'émetteur d'une balise du système de l'invention.

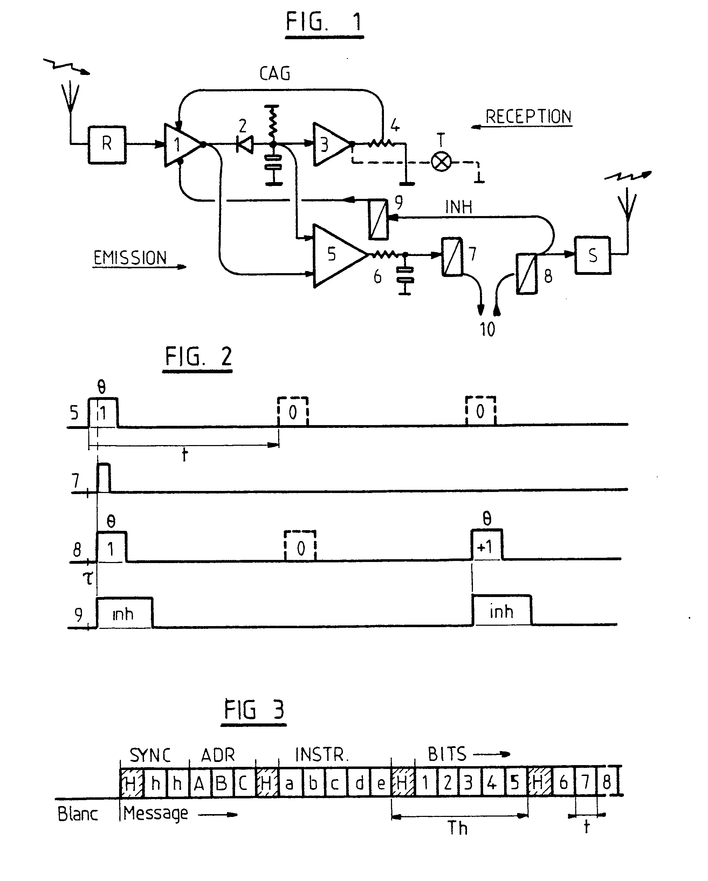

La balise de la fig. 1 comprend essentiellement un récepteur R et un émetteur S, accordés sur une même fréquence porteuse, laquelle est modulée par tout ou rien, par des trains successifs d'impulsions de largeur constante.

Les signaux captés par le récepteur R, puis traités par un amplificateur de mise en forme 1, sont appliqués à un montage détecteur/intégrateur 2 incluant un condensateur, dont la tension de charge, représentative du niveau moyen des signaux détectés, est appliquée, par l'intermédiaire d'un amplificateur adaptateur 3, à un potentiomètre 4 de contrôle du gain de l'amplificateur 1, et évantuellement à un tèmoin T de présence de porteuse.

Chaque signal impulsionnel, détecté par la diode du montage 2, est appliqué entre les entrées d'un amplificateur différentiel 5. Si le niveau du signal détecté dépasse un seuil déterminé, cet amplificateur fournit un courant constant à un montage intégrateur 6. L'amplificateur 5 est donc un dispositif détecteur de porteuse éliminant les parasites. Si la durée du signal détecté dépasse une valeur déterminée, la tension de charge atteinte par le condensateur du montage 6 permet l'excitation d'un univibrateur 7, lequel engendre en réponse une impulsion calibrée validant la bonne réception d'un signal. Le circuit 6, 7 est donc agencé pour autoriser la réception.

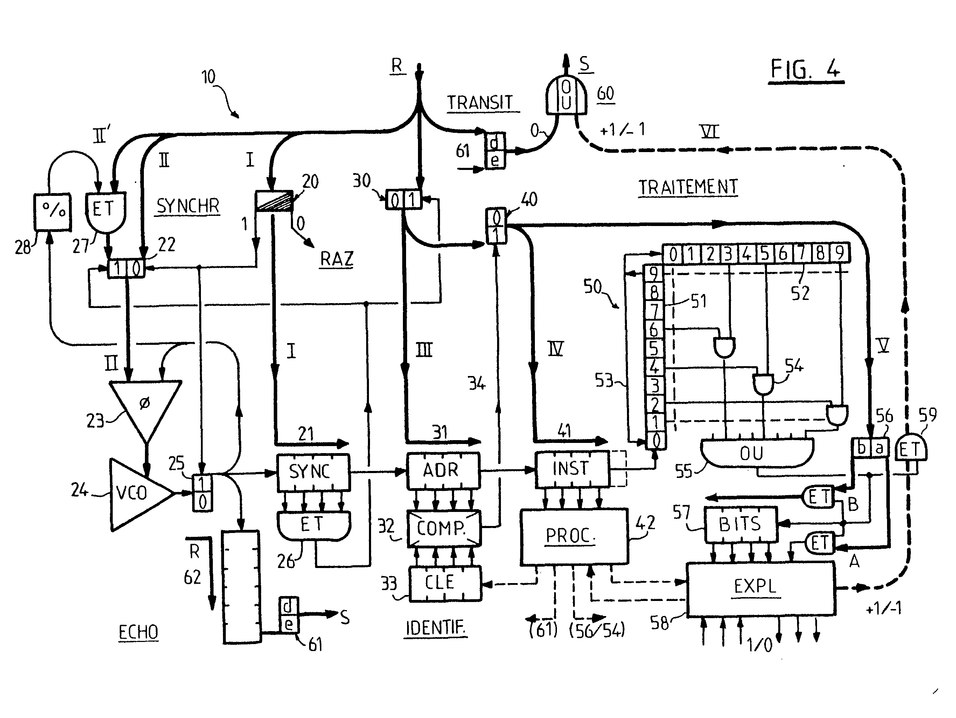

Cette impulsion de validation est appliquée à un second univibrateur 8, par l'intermédiaire de circuits de liaison 10 non représentés et qui seront ultérieurement décrits en relation avec la fig. 4, pour d'une part commander l'émission par l'émetteur S d'un signal impulsionnel identique à celui capté par le récepteur R, dès qu'un bit d'information est reçu d'une autre balise, et pour, d'autre part, bloquer la réception au moins pendant la durée de cette réémission, en inhibant l'amplificateur 1 par l'intermédiaire d'un troisième univibrateur 9.

Ainsi, toutes les balises du système de l'invention peuvent recevoir simultanément une même information, chaque balise retransmettant l'information reçue d'une autre balise à toutes les balises n'ayant pas reçu d'information.

La première ligne de la fig. 2 montre les impulsions d'information de sortie de l'amplificateur 5 qui, dans les meilleures conditions de transmission, sont identiques aux impulsions utilisées à l'origine pour moduler l'onde porteuse. De préférence, leur durée θ est relativement faible devant leur période de récurrence t, et leur niveau reste sensiblement constant pendant toute leur durée. Les tirets, sur la fig. 1, illustrent l'absence de telles impulsions.

La seconde ligne de la fig. 2 montre une impulsion de validation de réception issue de l'univibrateur 7, dont la durée propre et le niveau sont a priori indifférents et déterminés par les seuls besoins du fonctionnement des circuits. On remarquera que cette impulsion de validation n'est engendrée qu'après un certain délai après le début de la réception, mais ce délai est en réalité relativement très court.

La troisième ligne de la fig. 2 montre deux impulsions produites par l'univibrateur 8, qui présentent la même durée que les impulsions émises à l'origine et qui sont utilisées pour la modulation de l'émetteur S, afin de répéter le signal reçu à l'identique, certes avec un retard relatif, mais suffisamment faible, pour qu'on puisse les considérer comme simultanées.

Enfin, la quatrième ligne de la fig. 2 montre les impulsions d'inhibition de la réception accompagnant chaque impulsion réémise, pour éviter tout bouclage local de la transmission. On remarquera que ces impulsions d'inhibition sont de plus grande durée relative que les impulsions d'information, pour supprimer tout risque d'interférence; pour cette même raison, elles pourraient débuter dès la validation de la réception, l'univibrateur 9 étant à cet effet commandé à l'excitation de l'univibrateur 7. De toutes façons l'univibrateur 9 est commandé par l'univibrateur 8, pour que le récepteur R soit coupé lorsque la balise émet une information propre.

La fig. 3 montre un message transmis par le système, composé d'une série de balises identiques à celle de la fig. 1. Après un silence, ou temps "blanc", de durée quelconque, l'émission d'un message débute par une impulsion d'horloge H, immédiatement suivie de plusieurs impulsions de synchronisation h. Les impulsions consécutives A, B, C forment un code binaire d'adressage permettant d'activer sélectivement les balises du système auxquelles est attribuée une clé d'identification correspondante; ce code peut être de format quelconque mais invariable. La suite du message comprend éventuellement une instruction abcde, destinée à un processeur incorporé dans les balises, puis une séquence de bits 1—8 ..., chaque balise préalablement activée prenant en compte celui ou ceux de ces bits de rangs localement spécifiés, par conséquent durant un espace-temps alloué à la balise. Le nombre de ces bits, dans chaque message, peut être quelconque, mais limité à une valeur maximale déterminée, par exemple cent. En d'autres termes, la transmission des messages, avec le système de balises du type décrit ci-dessus, s'effectue bit par bit, et la génération d'une information propre, ou le traitement d'une information reçue par une balise, s'effectue à tour de rôle, balise par balise.

On remarquera que les impulsions significatives de code d'adressage, d'instruction et de bits sont intercalées entre des impulsions d'horloge H se répétant avec une période de récurrence Th multiple de la période entre impulsions consécutives t.

A titre d'exemple, on peut prendre t égal à 1 ms, T à 10 ms, $\tau$ étant égal à 100 µs.

La fig. 4 montre le schéma fonctionnel des circuits de liaison 10, par lesquels les circuits de réception R sont couplés aux circuits d'émission S, pour assurer la réémission à l'identique ou après traitement des signaux préalablement reçus. Il est bien entendu que les symboles utilisés pour représenter les différents éléments de ces circuits 10 n'ont qu'une valeur explicative et ne préjugent nullement leur réalisation matérielle.

La partie gauche de la figure regroupe essentiellement des circuits I et II destinés à assurer la synchronisation de la balise au début de la réception de chaque message.

L'impulsion d'horloge initiale H fait passer de l'état de repos (O) à l'état excité (1) un univibrateur 20, dont la durée de temporisation est supérieure à une période d'horloge, et dont le retour au repos fournit un signal RAZ de remise à zéro générale des bascules, registres et compteurs incorporés aux circuits 10, au cours du "blanc" suivant chaque message.

Cette première impulsion d'horloge et les impulsions de synchronisation h immédiatement consécutives sont séquentiellement chargées dans un registre 21, dont la progression est commandée en synchronisme avec la réception desdites impulsions par l'action du circuit II branché en dérivation sur le circuit I couplant la réception R à l'univibrateur 20 et au registre 21. Ce circuit II comprend une bascule de commutation 22 amenée à l'état (O) par l'excitation de l'univibrateur 20 et à travers laquelle les impulsions initiales d'horloge et de synchronisation sont directement transmises à l'une des entrées d'un comparateur de phase 23, dont l'autre entrée est couplée à la sortie d'un oscillateur local 24 à travers une bascule-interrupteur 25 rendue passante par l'univibrateur 20 et par ailleurs reliée à l'entrée de commande de progression du registre 21. La tension de commande fournie par le comparateur 23 à l'oscillateur 24 assure sa synchronisation exacte sur la fréquence de récurrence des impulsions initiales, égale à un multiple — par exemple dix — de la fréquence d'horloge.

Dès que le registre 21 a emmagasiné l'ensemble des impulsions initiales d'horloge et de synchronisation, une porte "ET" 26 associée commande la commutation de la bascule 22 à l'état (1) pour mettre en jeu un circuit II' incluant une porte "ET" 27 périodiquement rendue passante par un diviseur 28 — par exemple par dix — couplé à la bascule 25 contrôlant la sortie de l'oscillateur 24. Dès lors, seules les impulsions d'horloge parviennent au comparateur de phase 23 pour maintenir la bonne synchronisation de l'oscillateur 24 pendant la suite du message.

Le signal issu de la porte "ET" 26 validant la synchronisation amène à l'état passant (1) une bascule interrupteur 30 pour permettre, par un circuit III, le chargement séquentiel des impulsions du code d'adressage dans un registre 31. Le contenu final de ce registre est transmis en parallèle à un comparateur 32 qui reçoit par ailleurs d'une mémoire fixe ou reprogrammable 33 la clé d'identification attribuée à la balise. Si le code d'adressage répond à cette clé — c'est-à-dire lui est identique ou bien lui correspond au moins partiellement selon un critère déterminé de coïncidence de certains bits de même poids — le comparateur (32 émet un signal de validation du code d'adressage et d'activation de la balise, qui est transmis par une liaison 34 pour porter à l'état passant (1) une bascule 40, qui dès lors permet la prise en compte de la suite du message par des circuits de traitement IV et V dont les éléments sont représentés sur la moitié droite de la fig. 4.

Dans l'exemple choisi, il est supposé que la partie initiale du message incluant la première impulsion d'horloge, les impulsions de synchronisation et le code d'adressage occupe une période d'horloge, et est suivie d'une instruction de même format permettant le reconditionnement éventuel des circuits de traitement de la balise, voire la modification de sa clé d'identification.

Cette instruction — par exemple formée d'un paquet de bits, ou bytes, suivi d'un bit de parité —

est chargée, par un circuit IV issu de la bascule 40, dans un registre 41 dont le contenu final est lu par un processeur 42. On remarquera que ce registre comporte une position supplémentaire figurée en pointillé, destinée à recevoir l'impulsion d'horloge interposée entre le code d'adressage et l'instruction.

Après la prise en compte de l'instruction reçue par le processeur 42, les impulsions engendrées par l'oscillateur 24 commandent la progression d'un circuit de comptage et décodage matriciel 50, agencé pour notamment reconnaître le début de l'espace-temps alloué à la balise, à partir duquel elle traite l'information reçue et/ou engendre une information propre, et qui comprend essentiellement un premier étage 51 à dix positions suivi d'un second étage identique 52 monté en cascade, le premier étage étant bouclé sur lui-même par une liaison 53. Il est ainsi possible de discriminer, dans le cas considéré, cent rangs d'impulsions, dont le chiffre des unités et celui des dizaines sont respectivement fournis par les étages 51 et 52. On remarquera que la position "O" du premier étage n'est pas utilisée, et ce pour éviter la prise en compte des impulsions d'horloge non significatives.

Dans chaque balise, chaque rang d'impulsion à prendre en compte est prescrit à volonté par exemple au moyen d'un couple de roues codeuses décimales ou bien, comme le suggère le dessin, à l'aide d'un sélecteur matriciel à fiches: chaque fiche est supposée équipée d'une porte "ET" telle que 54, dont les entrées sont respectivement couplées à une colonne de dizaine (5) et à une ligne d'unité (4), et dont la sortie est reliée à l'une des entrées d'une porte "OU" multiple 55, qui donc signale en sortie l'occurrence de chaque rang affiché, à savoir "54" dans l'exemple considéré, au cours du processus de comptage. Bien entendu, chaque balise peut être ainsi conditionnée — éventuellement par le truchement d'instructions à cet effet fournies au processeur 42 — pour prendre en compte, soit une seule impulsion de rang spécifié, soit un ensemble de plusieurs impulsions de rangs consécutifs ou non.

Ces deux hypothèses impliquent des modes d'exploitation différents de la section "traitement" de la balise. Pour cette raison, les impulsions finales de chaque message sont transmises par un circuit V issu de la bascule 40 à une bascule d'aiguillage 56 portée, soit à l'état (a), soit à l'état (b) — par exemple sous contrôle du processeur 42 — selon qu'un seul rang d'impulsion ou un ensemble de plusieurs rangs est affiché.

Dans le premier cas, l'impulsion du rang spécifié est transmise par une liaison A contrôlée par une porte "ET" rendue passante par la porte "OU" 55 à une entrée correspondante de circuits 58 dits d'exploitation, car couplés à l'environnement de la balise par des circuits d'interface I/O comprenant des capteurs ou détecteurs et/ou des organes effecteurs, tels qu'un thermocouple ou un relais respectivement, ou encore des moyens de signalisation.

Dans le second cas, les impulsions de rangs spécifiés sont aiguillées par la bascule 56 sur une liaison B contrôlée par une porte "ET" sélectivement rendue passante par la porte "OU" 55, pour être séquentiellement chargées dans un registre 57 dont la progression est commandée par cette même porte "OU", et dont le contenu final est fourni à des entrées parallèles des circuits d'exploitation 58. Ces derniers sont couplés non seulement à l'environnement de la balise par les circuits d'interface I/O, mais encore au processeur 42 d'une part, et d'autre part à l'une des entrées d'une porte "ET" 59 sélectivement rendue passante par la porte "OU" 55 et par laquelle est contrôlée une liaison VI aboutissant à une porte "OU" 60 couplée aux circuits d'émission S. Cette dernière porte reçoit par ailleurs par un circuit de transit O comportant une bascule d'aiguillage 61 les signaux issus des circuits de réception R soit directement, soit par l'intermédiaire d'un registre à décalage 62 dit d'écho comportant plus de positions que le format maximal d'un message.

Ces dispositions sont justifiées par le fait que le traitement d'information effectué par les circuits d'exploitation 58 sous contrôle du processeur 42 s'il y a lieu, ou bien peut être assuré en temps réel ou "au vol" si un seul rang d'impulsion est affiché, ou bien doit être différé jusqu'après réception complète du message en cours si une combinaison de plusieurs rangs doit être prise en compte. Ceci signifie que, au niveau d'une balise, le traitement de l'information reçue ou la génération de son information propre, ne démarre qu'après réception de tout le message, la transmission des informations d'une balise à une autre continuant de s'effectuer bit par bit.

Dans le premier cas, si ce traitement correspond à une interrogation de la balise impliquant une éventuelle réponse de ses circuits d'exploitation 58, ces derniers peuvent parfaitement, dans l'espace-temps alloué à la balise, rajouter un bit d'information pour d'autres balises. Un échange d'information complexe avec la balise peut s'effectuer par voie séquentielle au moyen de telles informations élémentaires incorporées à des messages successifs, selon une convention d'exploitation éventuellement établie par une instruction appropriée fournie préalablement au processeur 42.

Dans le cas où une combinaison d'impulsions doit être prise en compte par la balise aux différents rangs spécifiés, dans son espace-temps, et correspond à une interrogation qui lui est adressée, la réponse fournie par ses circuits d'exploitation peut consister en l'émission sélective sur le circuit VI d'impulsions "+1" ou d'annulation "−1" à certains au moins des rangs spécifiés du message suivant. Dans ce cas, le système doit donc fonctionner en alternat, d'où l'invervention du registre à décalage 62, mais un échange d'information complexe peut s'effectuer avec un couple de messages, par exemple aller puis retour.

On remarquera bien que toute balise dy système peut être à volonté "reconditionnée" dans les limites permises par son agencement et par les circuits d'interface qui lui sont associés.

C'est encore dire qu'un système de transmission selon l'invention, formé d'un nombre quelconque de balises semblables, fixes et/ou mobiles et réparties dans l'espace de manière quelconque à la seule réserve que chacune se trouve à tout moment en relation avec au moins une autre, peut servir de véhicule à des informations de toute nature, qui peuvent être sélectivement adressées et/ou demandées à des unités désignées selon une organisation hiérarchique et/ou topologique modifiable à volonté.

## Revendications

1. Système de transmission d'informations de proche en proche, comprenant une série de balises identiques, comportant chacune, un émetteur et un récepteur accordés sur une même fréquence, et des moyens pour couper le récepteur dès que l'émetteur est mis en marche, chaque balise pouvant ainsi recevoir une information d'une autre et retransmettre cette information reçue d'une autre à au moins une balise n'ayant pas reçu d'information, système caractérisé par le fait que toutes les balises peuvent recevoir simultanément une même information et chaque balise retransmettre l'information reçue d'une autre à toutes les balises n'ayant pas reçu d'information, l'émetteur d'une balise est mis en marche dès qu'un élément binaire, ou "bit" d'information est reçu d'une autre balise, la transmission s'effectue bit par bit, et les balises possèdent des moyens pour engendrer une information propre et/ou traiter une information reçue.

2. Système de transmission selon la revendication 1, caractérisé par le fait que chaque balise comprend des moyens de comptage agencés pour reconnaître le début d'un espace-temps alloué à cette balise pour engendrer son information propre et/ou traiter l'information reçue.

3. Système de transmission selon l'une des revendications 1 et 2, caractérisé par le fait que chaque balise comprend des moyens de détection pour autoriser la réception.

4. Système de transmission selon l'une des revendications 1 à 3, caractérisé par le fait que chaque balise comprend un oscillateur local et des moyens de comparaison de phase pour synchroniser l'oscillateur.

5. Système de transmission selon la revendication 4, caractérisé par le fait que chaque balise comprend des moyens de commutation agencés pour transmettre des informations de synchronisation aux moyens de comparaison de phase.

6. Système de transmission selon l'une des revendications 1 à 5, caractérisé par le fait que chaque balise comprend un registre agencé pour recevoir des informations d'adressage, une mémoire contenant une clé d'identification, et un comparateur couplé au registre et à la mémoire pour activer la balise.

7. Système de transmission selon l'une des revendications 1 à 6, caractérisé par le fait que chaque balise comprend un registre agencé pour recevoir des informations d'instruction, et un processeur agencé pour traiter ces informations d'instruction.

8. Système de transmission selon l'une des revendications 1 à 7, caractérisé par le fait que chaque balise est constituée d'un récepteur, d'un émetteur et d'un unique processeur.

## Patentansprüche

1. Schrittweises Informationsübertragungssystem, umfassend eine Reihe identischer Baken von denen jede einen auf dieselbe Frequenz abgestimmten Sender und Empfänger umfaßt sowie Vorrichtungen zum Ausschalten des Empfängers sobald der Sender in Betrieb gesetzt wird, wodurch jede Bake von einer anderen eine Information empfangen kann und diese von einer anderen Bake empfangene Information mindestens einer Bake, welche keine Information empfangen hat, weiterübermitteln kann, System dadurch gekennzeichnet, daß alle Baken gleichzeitig dieselbe Information empfangen können und jede Bake die von einer anderen Bake empfangenene Information allen Baken weiterübermitteln kann, die keine Information empfangen haben, der Sender einer Bake wird in Betrieb genommen sobald ein Binärelement oder Informationsbit von einer anderen Bake empfangen wird, die Übertragung erfolgt Bit für Bit, und die Baken besitzen Mittel zur Erzeugung einer eigenen Information und/oder Verarbeitung einer empfangenen Information.

2. Übertragungssystem gemäß Anspruch 1, dadurch gekennzeichnet, daß jede Bake Zählvorrichtungen umfaßt, die eingerichtet sind, den Beginn eines dieser Bake zugestandenen Zeitraumes zur Erzeugung einer eigenen Information und/oder Verarbeitung der empfangenen Information zu erkennen.

3. Übertragungssystem gemäß einem der Ansprüche 1 und 2, dadurch gekennzeichnet, daß jede Bake Erfassungsmittel umfaßt, um den Empfang zu ermöglichen.

4. Übertragungssystem gemäß einem der Ansprüche 1—3, dadurch gekennzeichnet, daß jede Bake einen Überlagerungsoszillator umfaßt und Mittel zum Phasenvergleich, um den Oszillator zu synchronisieren.

5. Übertragungssystem gemäß Anspruch 4, dadurch gekennzeichnet, daß jede Bake Schaltvorrichtungen zum Übermitteln von Synchronisierungsinformationen an die Phasenvergleichsmittel umfaßt.

6. Übertragungssystem gemäß einem der Ansprüche 1—5, dadurch gekennzeichnet, daß jede Bake ein Register zum Empfang von Adressierungsinformationen enthält, einen Speicher mit Kennzeichnungsschlüssel und einen an das Register und den Speicher gekoppelten Komparator zum Aktivieren der Bake.

7. Übertragungssystem gemäß einem der Ansprüche 1—6, dadurch gekennzeichnet, daß jede Bake ein Register zum Empfang von Befehlsinformationen umfaßt und einen Prozessor zum Verarbeiten dieser Befehlsinformationen.

8. Übertragungssystem gemäß einem der Ansprüche 1—7, dadurch gekennzeichnet, daß jede Bake aus einem Empfänger, einem Sender und einem alleinigen Prozessor besteht.

## Claims

1. System for the transmission of information by degrees, comprising a series of identical beacons, each comprising an emitter and a receiver tuned to the same frequency, and means for cutting off the receiver as soon as the emitter is switched on, each beacon thus being able to receive an information from another and to retransmit that information received from another to at least one beacon not having received information, system characterized in that all the beacons are able to receive the same information simultaneously and each beacon is able to retransmit the information received from another to all the beacons not having received information, the emitter of one beacon is switched on as soon as a binary element, or "bit" of information, is received from another beacon, transmission is effected bit by bit, and the beacons possess means for creating their own information and for processing information received.

2. The transmission system according to Claim 1, characterized in that each beacon comprises counting means arranged to recognize the beginning of a space-time allocated to this beacon to create its own information and/or process the information received.

3. The transmission system according to one of Claims 1 or 2, characterized in that each beacon comprises detection means for allowing reception.

4. The transmission system according to one of Claims 1 to 3, characterized in that each beacon comprises a local oscillator and phase comparison means for synchronising the oscillator.

5. The transmission system of Claim 4, characterized in that each beacon comprises switching means arranged to transmit synchronisation information to the phase comparison means.

6. The transmission system according to one of Claims 1 to 5, characterized in that each beacon comprises a register arranged to receive addressing information, a store containing an identification key, and a comparator coupled to the register and to the store to activate the beacon.

7. The transmission system according to one of Claims 1 to 6, characterized in that each beacon comprises a register arranged to receive instruction information, and a processor arranged to process this instruction information.

8. The transmission system according to one of Claims 1 to 7, characterized in that each beacon is constituted by a receiver, an emitter and a single processor.

**0 028 188**

FIG. 1

CAG

RECEPTION

EMISSION

INH

FIG. 2

FIG 3

SYNC   ADR   INSTR.   BITS →

| H | h | h | A | B | C | H | a | b | c | d | e | H | 1 | 2 | 3 | 4 | 5 | H | 6 | 7 | 8 |

Blanc   Message →

Th

1

FIG. 4